# EUROPÄISCHE PATENTSCHRIFT

(11) **EP 3 476 574 B1**
(45) Veröffentlichungstag und Bekanntmachung des Hinweises auf die Patenterteilung: **15.07.2020**
(21) Anmeldenummer: 17198299.4
(22) Anmeldetag: 25.10.2017
(51) Int. Cl.: B29C 65/48, B32B 37/12, B32B 38/18

(54) **VERFAHREN ZUR AUSRICHTUNG UND VERKLEBUNG ZWEIER BAUTEILE MIT EINEM ZWEIKOMPONENTEN-KLEBSTOFF UND VORRICHTUNG**
METHOD FOR ALIGNING AND GLUING TWO COMPONENTS USING A TWO-COMPONENT ADHESIVE AND DEVICE
PROCÉDÉ D'ALIGNEMENT ET DE COLLAGE DE DEUX COMPOSANTS AU MOYEN D'UN ADHÉSIF À DEUX COMPOSANTS ET DISPOSITIF

(43) Veröffentlichungstag der Anmeldung: 01.05.2019
(73) Patentinhaber: ZKW Group GmbH, 3250 Wieselburg (AT)
(72) Erfinder: Bissinger, Stephan, 2700 Wr. Neustadt (AT); Hieger, Christof, 3142 Perschling (AT)
(74) Vertreter: Patentanwaltskanzlei Matschnig & Forsthuber OG

(56) Entgegenhaltungen:
- DE-A1-102015 201 308
- US-A1- 2007 157 953
- US-A1- 2016 168 423

## Beschreibung

Die Erfindung betrifft ein Verfahren zur Ausrichtung und Verklebung zweier Bauteile mit einem Zweikomponenten-Klebstoff.

Ein Zweikomponentenkleber, auch Zweikomponentenklebstoff oder 2K-Kleber genannt, ist ein Klebstoff, der aus verschiedenen Komponenten (Harz und Härter) besteht. Durch Vermischen der beiden Komponenten unmittelbar vor der Anwendung wird meist bereits bei Raumtemperatur eine Aushärte-Reaktion gestartet. Zweikomponentensysteme härten durch chemische Reaktionen wie Polyaddition, Polykondensation und Polymerisation aus. Werden nun zwei Bauteile miteinander durch einen vermischten Zweikomponentenkleber verbunden, so beginnt die Aushärtereaktion und möglicherweise besteht wenig oder gar zu wenig Zeit zum Ausrichten der zwei Bauteile untereinander. Speziell bei Bauteilen, die für einen Kraftfahrzeugscheinwerfer vorgesehen sind, ist oft eine präzise Ausrichtung vor der Fixierung der Verbindung durch den Klebstoff nötig. Zudem ist ein

Kraftfahrzeugscheinwerfer häufig komplex aufgebaut und schwierig zu montieren. Es kann auch eine optische Messeinrichtung benötigt werden, um eine endgültige Ausrichtung von Bauteilen untereinander zu bestimmen.

Folglich ist es im Stand der Technik nachteilig, dass die Aushärtezeit eines Zweikomponenten-Klebstoffs häufig zu kurz ist, um eine einfache Montage, präzise Justierung und haltbare Fixierung von Bauteilen einfach und kostengünstig durchzuführen, insbesondere bei Komponenten für Kraftfahrzeugscheinwerfer. Die DE 10 2015 201308 A1 zeigt einen Bauteil-Klebeverbund umfassend zwei Bauteile. Aus der DE213256A1 ist bereits ein Verfahren bekannt, was das Problem zumindest abmildert. In dem dort beschriebenen Verfahren wird je eine Komponente des Zweikomponentenklebstoffs auf eines der Werkstücke aufgetragen. Hierdurch beginnt das Aushärten des Klebstoffs erst, sobald die Werkstücke miteinander in Kontakt treten. Beim Ausrichten der Teile können diese jedoch in Kontakt miteinander treten bevor das Ausrichten vollständig abgeschlossen ist, weshalb eine weitere Verbesserung der verbleibenden Restzeit zur Aushärtung des Klebstoffs wünschenswert ist.

Es ist eine Aufgabe der Erfindung, die Nachteile im Stand der Technik zu überwinden.

Die Aufgabe wird durch ein Verfahren der eingangs genannten Art gelöst, indem folgende Verfahrensschritte ausgeführt werden:
- Aufbringen eines Harzes des Zweikomponenten-Klebstoffs auf zumindest eine erste vordefinierte Stelle auf einer ersten Folienseite einer Folie,
- Aufbringen eines Härters des Zweikomponenten-Klebstoffs auf zumindest eine zweite vordefinierte Stelle auf einer zweiten Folienseite der Folie, die der ersten Folienseite gegenüber liegt,
- Anordnen der Folie zwischen einem ersten Bauteil und einem zweiten Bauteil,
- Aneinanderpressen des ersten Bauteils an das zweite Bauteil mit einer ersten Anpresskraft, sodass das Harz beziehungsweise der Härter das erste Bauteil beziehungsweise das zweite Bauteil, jeweils in einer Kleberfläche kontaktiert,
- Ausrichten des ersten Bauteils mit dem zweiten Bauteil in der Ebene der Kleberfläche,
- Herausziehen der Folie mit einer Abziehkraft aus dem Bauteilverbund aus dem ersten Bauteil und dem zweiten Bauteil, wodurch sich das Harz und der Härter zu einem Zweikomponenten-Klebstoff-Gemisch vermengen,
- Aneinanderpressen des ersten Bauteils an das zweite Bauteil mit einer zweiten Anpresskraft und Ausrichten des ersten Bauteils mit dem zweiten Bauteil normal zur Ebene der Kleberfläche,
- Aushärten des Zweikomponenten-Klebstoff-Gemisches, indem der Härter das Harz aushärtet.

Dadurch wird erreicht, dass die Aushärtereaktion erst dann beginnt, wenn die Folie zwischen den Bauteilen, das heißt aus dem Bauteilverbund herausgezogen wird. Somit können der Zusammenbau der Bauteile und eine grobe Justage der Bauteile untereinander ohne Zeitdruck erfolgen.

Es ist günstig, wenn die Folie auf zumindest einer Seite eine Kammer aufweist, welche das Harz oder den Härter beinhaltet und vorzugsweise die Kammer an einem ersten Ende der Kammer offen ist, und es ferner vorgesehen ist, zum Herausziehen der Folie eine Abziehkraft an einem, dem ersten Ende gegenüberliegenden, zweiten Ende anzulegen. Dadurch wird erreicht, dass das Harz und der Härter bei der Montage der Bauteile besser gegen unerwünschte Berührung und Verschmutzung geschützt sind. Folglich wird die Hantierbarkeit verbessert.

Ferner ist es günstig, wenn zumindest eines von dem ersten Bauteil und dem zweiten Bauteil eine Abstreifkante aufweist, welche zwischen dem ersten Bauteil beziehungsweise dem zweiten Bauteil und der Folie angeordnet ist und vorzugsweise mit dem ersten Bauteil beziehungsweise dem zweiten Bauteil einteilig ausgeführt ist und die Abstreifkante eingerichtet ist, ein Herausziehen des Harzes beziehungsweise des Härters beim Herausziehen der Folie zu behindern, sodass das Harz beziehungsweise der Härter zwischen dem ersten Bauteil beziehungsweise dem zweiten Bauteil verbleibt. Dadurch wird erreicht, dass die Menge an Harz und Härter, welche zwischen den Bauteilen verbleiben soll, vergrößert werden kann, was hinsichtlich Kosten und Effizienz vorteilhaft ist.

Es ist besonders günstig, wenn die Abstreifkante auf der Kleberfläche auf dem ersten Bauteil beziehungsweise auf dem zweiten Bauteil ausgebildet ist und in Richtung des jeweiligen anderen Bauteils von dem ersten Bauteil und dem zweiten Bauteil eine Erhöhung aufweist.

Es ist bevorzugt, wenn zumindest eines von dem ersten Bauteil und dem zweiten Bauteil eine Trennkante aufweist, welche zwischen dem ersten Bauteil beziehungsweise dem zweiten Bauteil und der Folie angeordnet ist und vorzugsweise mit dem ersten Bauteil beziehungsweise dem zweiten Bauteil einteilig ausgeführt ist, und die Trennkante eingerichtet ist, die flächige Ausbreitung der einzelnen Komponenten oder des Gemisches des Zweikomponenten-Klebstoffs auf dem ersten Bauteil beziehungsweise dem zweiten Bauteil zu begrenzen. Dadurch wird erreicht, dass sich die Menge an Harz und Härter, welche zwischen den Bauteilen verbleiben soll, nur in einem durch die Trennkante vorbestimmten Bereich verteilt, was hinsichtlich unerwünschter Klebestellen, Materialbeeinträchtigungen, unerwünschter Verschmutzung von benachbarten elektronischen und optischen Bauelementen, sowie Kosten und Effizienz vorteilhaft ist.

Es ist besonders bevorzugt, wenn die Trennkante auf der Kleberfläche auf dem ersten Bauteil beziehungsweise auf dem zweiten Bauteil ausgebildet ist und in Richtung des jeweiligen anderen Bauteils von dem ersten Bauteil und dem zweiten Bauteil eine Erhöhung aufweist.

Eine Abstreifkante kann auch dafür sorgen, dass durch einen mechanischen Anschlag, welcher durch die Abstreifkante einen Abstandhalter bildet, eine definierte Klebstoffdicke nach dem Aushärten erreicht wird, um beispielsweise eine optimale Wärmeleitung oder hohe mechanische Stabilität zu erreichen.

Außerdem ist es günstig, wenn die Folie zumindest eine Justieröffnung umfasst, welche eingerichtet ist mit zumindest einem korrespondierenden Justierstift, welcher auf dem ersten Bauteil und/oder dem zweiten Bauteil angeordnet ist, zusammenzuwirken und welche Justieröffnung so konfiguriert ist, dass die Folie in der Richtung der Abziehkraft entfernt werden kann. Dadurch kann ein erleichterter und vereinfachter Zusammenbau erreicht werden.

Der Justierstift kann verschiedene Formen annehmen, wobei bevorzugt eine längserstreckte Form mit beispielweise rundem oder rechteckigem Querschnitt gewählt wird. Die Justieröffnung weist bevorzugt eine dazu komplementäre Form auf.

Es ist günstig, wenn die Justieröffnung in ihrem Durchmesser, quer zur Achse ihrer Längserstreckung, größer ist als der Justierstift, um eine Justierbarkeit der Anordnung im nicht verklebten Zustand zu gewährleisten.

Die Aufgabe wird auch durch einen eingangs genannten Bauteil-Klebeverbund gelöst, wobei ein erstes Bauteil und ein zweites Bauteil nach dem erfindungsgemäßen Verfahren miteinander ausgerichtet und verklebt sind, da die Vorzüge des Verfahrens besonders gut anwendbar sind.

Es ist bevorzugt, wenn das erste Bauteil und/oder das zweite Bauteil als ein optisches Bauteil oder ein optoelektronisches Bauteil oder ein Halterelement für Bauteile oder eine Leiterplatte ausgeführt sind.

Die Aufgabe wird auch durch einen eingangs genannten Kraftfahrzeugscheinwerfer gelöst, wobei der Kraftfahrzeugscheinwerfer zumindest einen erfindungsgemäßen Bauteil-Klebeverbund umfasst, da die Vorzüge des Verfahrens besonders gut anwendbar sind.

Der zumindest eine erfindungsgemäße Bauteil-Klebeverbund kann auch von einem Lichtmodul eines Kraftfahrzeugscheinwerfers umfasst sein.

Eine Weiterentwicklung der Erfindung ist eine Folie, welche vorzugsweise in dem erfindungsgemäßen Verfahren verwendet wird. Die Folie weist auf zumindest einer Seite eine Kammer auf, welche ein Harz oder einen Härter beinhaltet, und vorzugsweise die Kammer an einem ersten Ende offen ist, und es ferner vorgesehen ist, zum Herausziehen der Folie eine Abziehkraft an einem, dem ersten Ende gegenüberliegenden, zweiten Ende anzulegen.

Es ist dem Fachmann klar, dass ein Lichtmodul oder ein Fahrzeugscheinwerfer für ein Kraftfahrzeug, wie insbesondere ein PKW oder Motorrad, noch viele andere, nicht erwähnte Teile enthält, wie beispielsweise Kühlvorrichtungen für Bauteile, Ansteuerungselektronik, weitere optische Elemente, mechanische Verstelleinrichtungen beziehungsweise Halterungen.

Die Erfindung und deren Vorteile werden im Folgenden anhand von nicht einschränkenden Ausführungsbeispielen näher beschrieben, die in den beiliegenden Zeichnungen veranschaulicht sind. Die Zeichnungen zeigen in
- Fig. 1a - Fig. 1d: eine schematische Darstellung von Bauteilen in einer Seitenansicht, welche durch eine erste Ausführungsform des erfindungsgemäßen Verfahrens ausgerichtet und verklebt sind;
- Fig. 2a - Fig. 2d: eine schematische Darstellung von Bauteilen in einer Seitenansicht, welche durch die erste Ausführungsform des erfindungsgemäßen Verfahrens ausgerichtet und verklebt sind;
- Fig. 3a - Fig. 3d: eine schematische Darstellung von Bauteilen in einer Seitenansicht, welche durch die erste Ausführungsform des erfindungsgemäßen Verfahrens ausgerichtet und verklebt sind;
- Fig. 4a - Fig. 4d: eine schematische Darstellung von Bauteilen in einer Seitenansicht, welche durch die erste Ausführungsform des erfindungsgemäßen Verfahrens ausgerichtet und verklebt sind;
- Fig. 5a: eine schematische Darstellung einer Folie in einer ersten Ausführungsform mit einem Harz und einem Härter in einer Seitenansicht;
- Fig. 5b: eine schematische Darstellung einer Folie in einer zweiten Ausführungsform mit zwei Kammern, einem Harz und einem Härter in einer Seitenansicht;
- Fig. 6: eine schematische Darstellung von Bauteilen in einer perspektivischen Ansicht, welche einen Verfahrensschritt zum Ausrichten der Bauteile als weitere Ausführungsform des erfindungsgemäßen Verfahrens illustriert;
- Fig. 7: eine schematische Darstellung von Bauteilen in einer Seitenansicht einer Ausführungsform eines erfindungsgemäßen Kraftfahrzeugscheinwerfers.

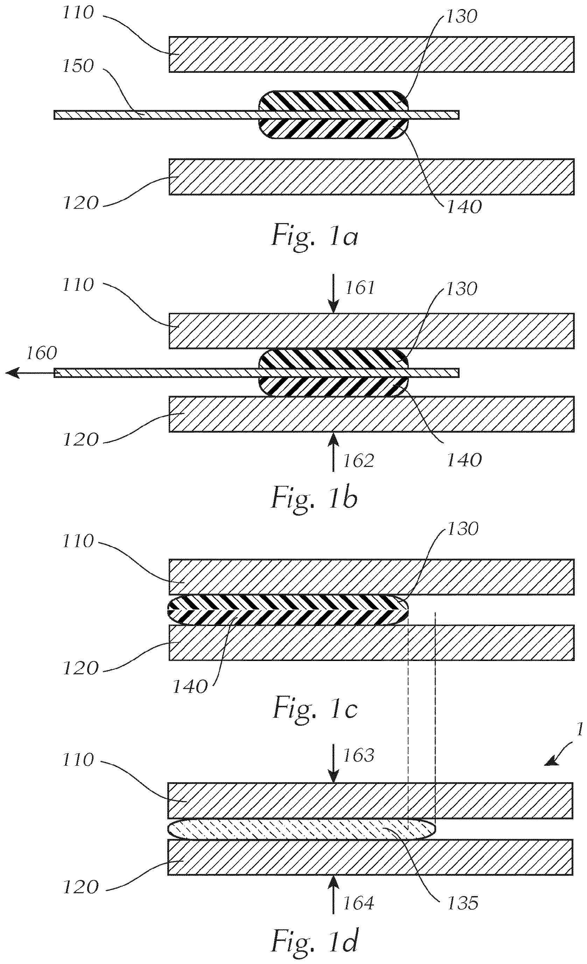

Unter Bezugnahme auf **Fig. 1a** bis **Fig. 7** werden nun Ausführungsbeispiele der Erfindung näher erläutert. Insbesondere sind für die Erfindung in einem Scheinwerfer wichtige Teile dargestellt, wobei klar ist, dass ein Scheinwerfer noch viele andere, nicht gezeigte Teile enthält, die einen sinnvollen Einsatz in einem Kraftfahrzeug, wie insbesondere einem PKW oder Motorrad, ermöglichen. Der Übersichtlichkeit halber sind daher beispielsweise Kühlvorrichtungen für Bauteile, Ansteuerungselektronik, weitere optische Elemente, mechanische Verstelleinrichtungen beziehungsweise Halterungen nicht gezeigt.

Fig. 1a bis Fig. 1d zeigen eine Ausführungsvariante des erfindungsgemäßen Verfahrens zur Ausrichtung und Verklebung zweier Bauteile 110, 120 mit einem Zweikomponenten-Klebstoff.

Dabei werden folgende Verfahrensschritte ausgeführt:
**Fig. 1a** zeigt ein aufgebrachtes Harz 130 des Zweikomponenten-Klebstoffs auf zumindest eine erste vordefinierte Stelle auf einer ersten Folienseite einer Folie 150 und einen aufgebrachten Härter 140 des Zweikomponenten-Klebstoffs auf zumindest eine zweite vordefinierte Stelle auf einer zweiten Folienseite der Folie 150, die der ersten Folienseite gegenüber liegt.

Ferner zeigt Fig. 1a die Folie 150 mit dem Harz 130 und dem Härter 140, welche zwischen einem ersten Bauteil 110 und einem zweiten Bauteil 120 angeordnet ist.

**Fig. 1b** deutet ein Aneinanderpressen des ersten Bauteils 110 an das zweite Bauteil 120 mit einer ersten Anpresskraft 161 bzw. 162 an, sodass das Harz 130 beziehungsweise der Härter 140 das erste Bauteil 110 beziehungsweise das zweite Bauteil 120 jeweils in einer Kleberfläche kontaktiert.

Nun kann ein Ausrichten des ersten Bauteils 110 mit dem zweiten Bauteil 120 in der Ebene der Kleberfläche erfolgen.

Ferner deutet Fig. 1b ein Herausziehen der Folie 150 mit einer Abziehkraft 160 aus dem Bauteilverbund aus dem ersten Bauteil 110 und dem zweiten Bauteil 120 an, wodurch sich das Harz 130 und der Härter 140 zu einem Zweikomponenten-Klebstoff-Gemisch 135 vermengen können, wie in **Fig. 1c** und **Fig. 1d** gezeigt.

**Fig. 1d** zeigt ein anschließendes Aneinanderpressen des ersten Bauteils 110 an das zweite Bauteil 120 mit einer zweiten Anpresskraft 163 bzw. 164 und ein Ausrichten des ersten Bauteils 110 mit dem zweiten Bauteil 120 normal zur Ebene der Kleberfläche.

In dieser Konfiguration erfolgt ein Aushärten des Zweikomponenten-Klebstoff-Gemisches 135, indem der Härter 140 das Harz 130 aushärtet, wodurch ein Bauteil-Klebeverbund 1 hergestellt ist.

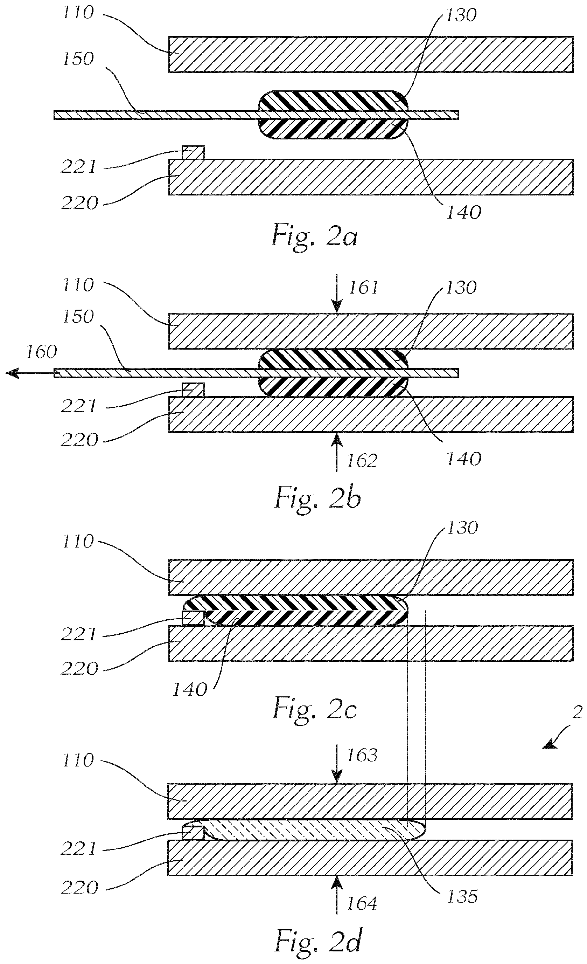

Fig. 2a bis Fig. 2d zeigen eine Ausführungsvariante des erfindungsgemäßen Verfahrens zur Ausrichtung und Verklebung zweier Bauteile 110, 220 mit einem Zweikomponenten-Klebstoff. In diesem Beispiel weist das zweite Bauteil 220 zusätzlich eine Abstreifkante 221 auf, welche zwischen dem ersten Bauteil 110 beziehungsweise dem zweiten Bauteil 220 und der Folie 150 angeordnet ist.

Die Abstreifkante 221 ist vorzugsweise mit dem zweiten Bauteil 220 einteilig ausgeführt, ist auf der Kleberfläche auf dem zweiten Bauteil 220 ausgebildet und weist in Richtung des ersten Bauteils 110 eine Erhöhung auf.

Ferner ist die Abstreifkante 221 eingerichtet, ein Herausziehen des Harzes 130 beziehungsweise des Härters 140 beim Herausziehen der Folie 150 zu behindern, sodass das Harz 130 beziehungsweise der Härter 140 zwischen dem ersten Bauteil 110 beziehungsweise dem zweiten Bauteil 220 verbleibt.

Analog zur ersten Ausführungsvariante des Verfahrens werden folgende Verfahrensschritte ausgeführt:
**Fig. 2a** zeigt ein aufgebrachtes Harz 130 des Zweikomponenten-Klebstoffs auf zumindest eine erste vordefinierte Stelle auf einer ersten Folienseite einer Folie 150 und einen aufgebrachten Härter 140 des Zweikomponenten-Klebstoffs auf zumindest eine zweite vordefinierte Stelle auf einer zweiten Folienseite der Folie 150, die der ersten Folienseite gegenüber liegt.

Ferner zeigt Fig. 2a die Folie 150 mit dem Harz 130 und dem Härter 140, welche zwischen einem ersten Bauteil 110 und einem zweiten Bauteil 220 angeordnet ist.

**Fig. 2b** deutet ein Aneinanderpressen des ersten Bauteils 110 an das zweite Bauteil 220 mit einer ersten Anpresskraft 161 bzw. 162 an, sodass das Harz 130 beziehungsweise der Härter 140 das erste Bauteil 110 beziehungsweise das zweite Bauteil 220 jeweils in einer Kleberfläche kontaktiert.

Nun kann ein Ausrichten des ersten Bauteils 110 mit dem zweiten Bauteil 220 in der Ebene der Kleberfläche erfolgen.

Ferner deutet Fig. 2b ein Herausziehen der Folie 150 mit einer Abziehkraft 160 aus dem Bauteilverbund aus dem ersten Bauteil 110 und dem zweiten Bauteil 220 an, wodurch sich das Harz 130 und der Härter 140 zu einem Zweikomponenten-Klebstoff-Gemisch 135 vermengen können, wie in **Fig. 2c** und **Fig. 2d** gezeigt.

Durch die Abstreifkante 221 wird erreicht, dass nach dem Herausziehen der Folie 150 das Harz 130 und der Härter 140 in einem etwas höheren Maße am Herausziehen behindert werden und folglich zwischen dem ersten Bauteil 110 und dem zweiten Bauteil 220 verbleiben.

**Fig. 2d** zeigt ein anschließendes Aneinanderpressen des ersten Bauteils 110 an das zweite Bauteil 220 mit einer zweiten Anpresskraft 163 bzw. 164 und ein Ausrichten des ersten Bauteils 110 mit dem zweiten Bauteil 220 normal zur Ebene der Kleberfläche.

In dieser Konfiguration erfolgt ein Aushärten des Zweikomponenten-Klebstoff-Gemisches 135, indem der Härter 140 das Harz 130 aushärtet, wodurch ein Bauteil-Klebeverbund 2 hergestellt ist.

Es ist an den strichlierten Linien zwischen der Fig. 2c und der Fig. 2d erkennbar, dass sich das Harz 130 beziehungsweise der Härter 140 jeweils unkontrolliert und möglicherweise unerwünscht auf dem ersten Bauteil 110 und dem zweiten Bauteil 220 verteilen können.

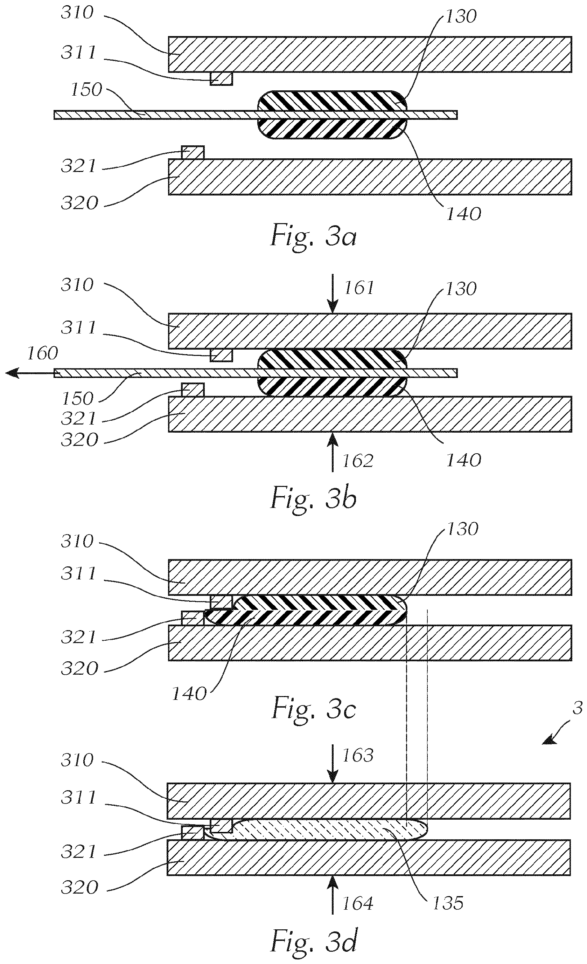

Fig. 3a bis Fig. 3d zeigen eine weitere Ausführungsvariante des erfindungsgemäßen Verfahrens zur Ausrichtung und Verklebung zweier Bauteile 310, 320 mit einem Zweikomponenten-Klebstoff.

In diesem Beispiel weist das erste Bauteil 310 sowie das zweite Bauteil 320 zusätzlich jeweils eine Abstreifkante 311, 321 auf, welche zwischen dem ersten Bauteil 310 beziehungsweise dem zweiten Bauteil 320 und der Folie 150 angeordnet ist.

Die Abstreifkante 311, 321 ist vorzugsweise mit dem ersten Bauteil 310 beziehungsweise dem zweiten Bauteil 320 einteilig ausgeführt, ist auf der Kleberfläche auf dem ersten Bauteil 310 beziehungsweise auf dem zweiten Bauteil 320 ausgebildet und weist in Richtung des jeweiligen anderen Bauteils von dem ersten Bauteil 310 und dem zweiten Bauteil 320 eine Erhöhung auf.

Ferner ist die Abstreifkante 311, 321 eingerichtet, ein Herausziehen des Harzes 130 beziehungsweise des Härters 140 beim Herausziehen der Folie 150 zu behindern, sodass das Harz 130 beziehungsweise der Härter 140 zwischen dem ersten Bauteil 310 beziehungsweise dem zweiten Bauteil 320 verbleibt.

Analog zur ersten Ausführungsvariante des Verfahrens werden folgende Verfahrensschritte ausgeführt:
**Fig. 3a** zeigt ein aufgebrachtes Harz 130 des Zweikomponenten-Klebstoffs auf zumindest eine erste vordefinierte Stelle auf einer ersten Folienseite einer Folie 150 und einen aufgebrachten Härter 140 des Zweikomponenten-Klebstoffs auf zumindest eine zweite vordefinierte Stelle auf einer zweiten Folienseite der Folie 150, die der ersten Folienseite gegenüber liegt.

Ferner zeigt Fig. 3a die Folie 150 mit dem Harz 130 und dem Härter 140, welche zwischen einem ersten Bauteil 310 und einem zweiten Bauteil 320 angeordnet ist.

**Fig. 3b** deutet ein Aneinanderpressen des ersten Bauteils 310 an das zweite Bauteil 320 mit einer ersten Anpresskraft 161 bzw. 162 an, sodass das Harz 130 beziehungsweise der Härter 140 das erste Bauteil 310 beziehungsweise das zweite Bauteil 320 jeweils in einer Kleberfläche kontaktiert.

Nun kann ein Ausrichten des ersten Bauteils 310 mit dem zweiten Bauteil 320 in der Ebene der Kleberfläche erfolgen.

Ferner deutet Fig. 3b ein Herausziehen der Folie 150 mit einer Abziehkraft 160 aus dem Bauteilverbund aus dem ersten Bauteil 310 und dem zweiten Bauteil 320 an, wodurch sich das Harz 130 und der Härter 140 zu einem Zweikomponenten-Klebstoff-Gemisch 135 vermengen können, wie in **Fig. 3c** und **Fig. 3d** gezeigt.

Durch die beidseitigen Abstreifkanten 311, 321 wird erreicht, dass nach dem Herausziehen der Folie 150 das Harz 130 und der Härter 140 in einem höheren Maße am Herausziehen behindert werden und folglich zwischen dem ersten Bauteil 310 und dem zweiten Bauteil 320 verbleiben.

**Fig. 3d** zeigt ein anschließendes Aneinanderpressen des ersten Bauteils 310 an das zweite Bauteil 320 mit einer zweiten Anpresskraft 163 bzw. 164 und ein Ausrichten des ersten Bauteils 310 mit dem zweiten Bauteil 320 normal zur Ebene der Kleberfläche.

In dieser Konfiguration erfolgt ein Aushärten des Zweikomponenten-Klebstoff-Gemisches 135, indem der Härter 140 das Harz 130 aushärtet, wodurch ein Bauteil-Klebeverbund 3 hergestellt ist.

Es ist an den strichlierten Linien zwischen der Fig. 3c und der Fig. 3d erkennbar, dass sich das Harz 130 beziehungsweise der Härter 140 jeweils unkontrolliert und möglicherweise unerwünscht auf dem ersten Bauteil 310 und dem zweiten Bauteil 320 verteilen können.

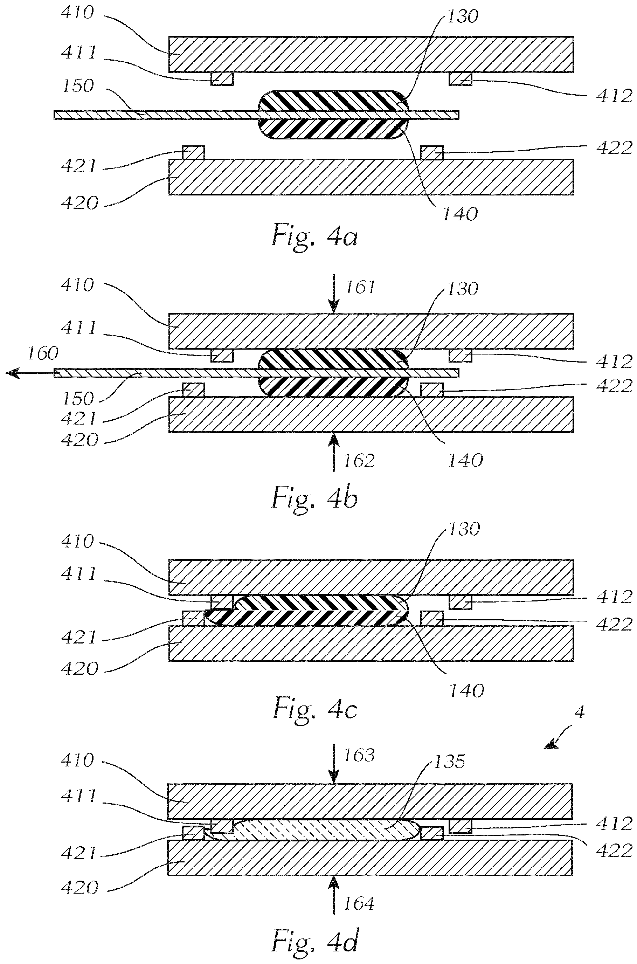

Fig. 4a bis Fig. 4d zeigen eine weitere Ausführungsvariante des erfindungsgemäßen Verfahrens zur Ausrichtung und Verklebung zweier Bauteile 410, 420 mit einem Zweikomponenten-Klebstoff.

In diesem Beispiel weist das erste Bauteil 410 sowie das zweite Bauteil 420 zusätzlich jeweils eine Abstreifkante 411 und 421 auf, welche zwischen dem ersten Bauteil 410 beziehungsweise dem zweiten Bauteil 420 und der Folie 150 angeordnet ist.

Die Abstreifkante 411, 421 ist vorzugsweise mit dem ersten Bauteil 420 beziehungsweise dem zweiten Bauteil 420 einteilig ausgeführt, ist auf der Kleberfläche auf dem ersten Bauteil 410 beziehungsweise auf dem zweiten Bauteil 420 ausgebildet und weist in Richtung des jeweiligen anderen Bauteils von dem ersten Bauteil 410 und dem zweiten Bauteil 420 eine Erhöhung auf.

In diesem Beispiel weist das erste Bauteil 410 sowie das zweite Bauteil 420 zusätzlich jeweils eine Trennkante 412 und 422 auf, welche zwischen dem ersten Bauteil 410 beziehungsweise dem zweiten Bauteil 420 und der Folie 150 angeordnet ist.

Die Trennkante 412, 422 ist vorzugsweise mit dem ersten Bauteil 410 beziehungsweise dem zweiten Bauteil 420 einteilig ausgeführt, auf der Kleberfläche auf dem ersten Bauteil 410 beziehungsweise auf dem zweiten Bauteil 420 ausgebildet und weist in Richtung des jeweiligen anderen Bauteils von dem ersten Bauteil 410 und dem zweiten Bauteil 420 eine Erhöhung auf.

Ferner ist die Trennkante 412, 422 eingerichtet, die flächige Ausbreitung des Zweikomponenten-Klebstoff-Gemisches 135 auf dem ersten Bauteil 410 beziehungsweise dem zweiten Bauteil 420 zu begrenzen.

Analog zur ersten Ausführungsvariante des Verfahrens werden folgende Verfahrensschritte ausgeführt:
**Fig. 4a** zeigt ein aufgebrachtes Harz 130 des Zweikomponenten-Klebstoffs auf zumindest eine erste vordefinierte Stelle auf einer ersten Folienseite einer Folie 150 und einen aufgebrachten Härter 140 des Zweikomponenten-Klebstoffs auf zumindest eine zweite vordefinierte Stelle auf einer zweiten Folienseite der Folie 150, die der ersten Folienseite gegenüber liegt.

Ferner zeigt Fig. 3a die Folie 150 mit dem Harz 130 und dem Härter 140, welche zwischen einem ersten Bauteil 410 und einem zweiten Bauteil 420 angeordnet ist.

**Fig. 4b** deutet ein Aneinanderpressen des ersten Bauteils 410 an das zweite Bauteil 420 mit einer ersten Anpresskraft 161 bzw. 162 an, sodass das Harz 130 beziehungsweise der Härter 140 das erste Bauteil 410 beziehungsweise das zweite Bauteil 420 jeweils in einer Kleberfläche kontaktiert.

Nun kann ein Ausrichten des ersten Bauteils 410 mit dem zweiten Bauteil 420 in der Ebene der Kleberfläche erfolgen.

Ferner deutet Fig. 4b ein Herausziehen der Folie 150 mit einer Abziehkraft 160 aus dem Bauteilverbund aus dem ersten Bauteil 410 und dem zweiten Bauteil 420 an, wodurch sich das Harz 130 und der Härter 140 zu einem Zweikomponenten-Klebstoff-Gemisch 135 vermengen können, wie in **Fig. 4c** und **Fig. 4d** gezeigt.

Durch die beidseitigen Abstreifkanten 411, 421 wird erreicht, dass nach dem Herausziehen der Folie 150 das Harz 130 und der Härter 140 in einem höheren Maße am Herausziehen behindert werden und folglich zwischen dem ersten Bauteil 410 und dem zweiten Bauteil 420 verbleiben.

Durch die Trennkanten 412, 422 wird erreicht, dass sich das Harz 130 beziehungsweise der Härter 140 jeweils nicht unkontrolliert und unerwünscht auf dem ersten Bauteil 410 und dem zweiten Bauteil 420 verteilen. Mit anderen Worten wird die Fläche begrenzt, auf der die Klebeverbindung mit dem Zweikomponenten-Klebstoff hergestellt werden soll.

**Fig. 4d** zeigt ein anschließendes Aneinanderpressen des ersten Bauteils 410 an das zweite Bauteil 420 mit einer zweiten Anpresskraft 163 bzw. 164 und ein Ausrichten des ersten Bauteils 410 mit dem zweiten Bauteil 420 normal zur Ebene der Kleberfläche.

In dieser Konfiguration erfolgt ein Aushärten des Zweikomponenten-Klebstoff-Gemisches 135, indem der Härter 140 das Harz 130 aushärtet, wodurch ein Bauteil-Klebeverbund 4 hergestellt ist.

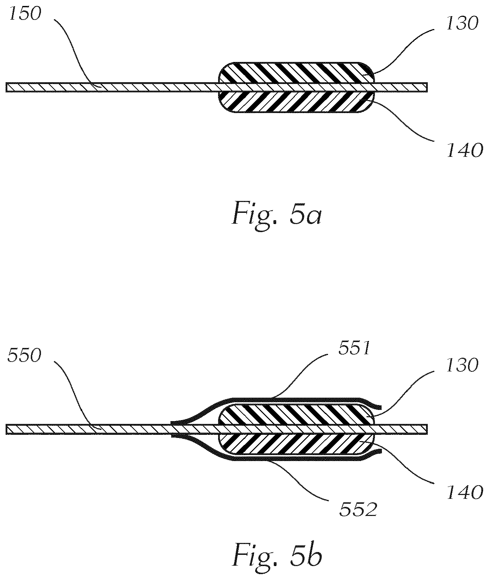

Fig. 5a zeigt die Folie 150 gemäß der vorhergehenden Figuren mit dem Harz 130 und dem Härter 140.

Die Folie 150 ist bevorzugt zur Verwendung im erfindungsgemäßen Verfahren vorgesehen.

Fig. 5b zeigt eine alternative Ausführungsform einer Folie 550, welche auf beiden Seiten jeweils eine Kammer 551, 552 aufweist, welche das Harz 130 beziehungsweise den Härter 140 beinhalten.

Die Kammern 551, 552 sind jeweils an einem ersten Ende der Kammern 551, 552 offen.

Die Folie 550 ist bevorzugt zur Verwendung im erfindungsgemäßen Verfahren vorgesehen.

Es ist zum Herausziehen der Folie 550 vorgesehen, eine Abziehkraft 160 an einem, dem ersten Ende gegenüberliegenden, zweiten Ende anzulegen.

Alternativ kann eine Kammer mit Harz oder Härter auch geschlossen sein und zusätzlich eine Sollreißstelle oder Sollbruchstelle aufweisen, wie insbesondere eine Perforation. Die Performation reißt bei Zusammenpressen der Kammer auf und das Harz oder der Härter tritt aus. Dadurch kann erreicht werden, dass beispielsweise eine vorkonfektionierte Folie leichter zu lagern oder zu versenden ist.

Durch die Kammer kann erreicht werden, dass mit der Folie 550 nach dem Auftragen von Harz 130 und Härter 140 beim Zusammenbau der Anordnung leichter hantiert werden kann, das Harz 130 und Härter 140 auf der Folie 550 geschützt in der vorgesehenen Position gehalten werden können.

Beim Herausziehen der Folie 550 wird das Harz 130 und Härter 140 aus den Kammern 551, 552 herausgedrückt und verbleibt zwischen den Bauteilen 410 und 420.

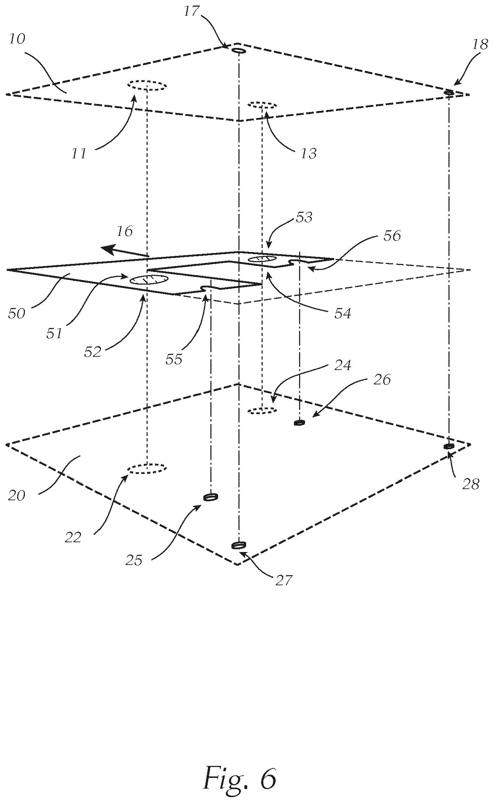

In der Fig. 6 ist schematisch eine Folie 50 dargestellt, welche an zwei Stellen jeweils Harz 51 und 53 sowie Härter 52 und 54 aufweist. An einem ersten Bauteil 10 soll das Harz 51, 53 an den Kleberflächen 11 und 13 kontaktieren, und an einem zweiten Bauteil 20 soll der Härter 52, 54 an den Kleberflächen 22, 24 kontaktieren.

Zusätzlich umfasst die Folie 50 zwei Justieröffnungen 55, 56, welche jeweils eingerichtet sind, mit einem korrespondierenden Justierstift 25, 26, welcher auf dem zweiten Bauteil 20 angeordnet ist, zusammenzuwirken.

Zusätzlich umfasst das erste Bauteil 10 zwei Justieröffnungen 17, 18, welche eingerichtet sind, mit jeweils korrespondierenden Justierstiften 27, 28, welche auf dem zweiten Bauteil 20 angeordnet sind, zusammenzuwirken und welche Justieröffnungen 17, 18 so konfiguriert sind, dass die Folie 50 in der Richtung der Abziehkraft 160 entfernt werden kann.

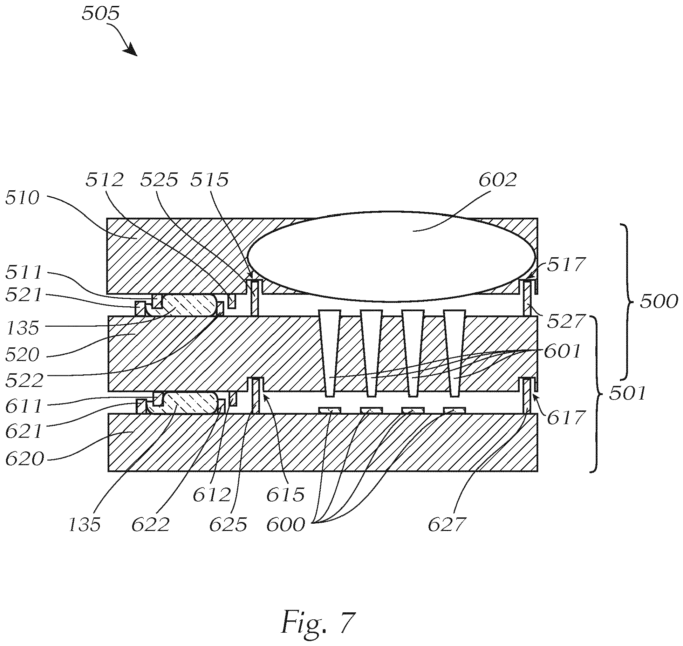

**Fig. 7** zeigt schematisch einen Kraftfahrzeugscheinwerfer 505, umfassend einen ersten Bauteil-Klebeverbund 500, bei welchem ein erstes Bauteil 510 und ein zweites Bauteil 520 nach dem erfindungsgemäßen Verfahren miteinander ausgerichtet und verklebt sind.

Außerdem ist ein zweiter Bauteil-Klebeverbund 501 erkennbar, bei welchem ein erstes Bauteil 520 und ein zweites Bauteil 620 nach dem erfindungsgemäßen Verfahren miteinander ausgerichtet und verklebt sind. Das zweite Bauteil 520 des ersten Bauteil-Klebeverbunds 500 bildet gleichzeitig das erste Bauteil 520 des zweiten Bauteil-Klebeverbunds 501.

Das erste Bauteil 510 des ersten Bauteil-Klebeverbunds 500 ist ein Halter für eine Projektionsoptik 602, beispielsweise in Form einer Sammellinse. Die Projektionsoptik 602 ist eingerichtet, von einer Vielzahl an Lichtleitern 601 ausgekoppeltes Licht in Richtung der Abstrahlrichtung des Kraftfahrzeugscheinwerfers zu projizieren.

Das zweite Bauteil 520 des ersten Bauteil-Klebeverbunds 500, bzw. das erste Bauteil 520 des zweiten Bauteil-Klebeverbunds 501 ist ein Halter für die Vielzahl an Lichtleitern 601.

Das zweite Bauteil 620 des zweiten Bauteil-Klebeverbunds 501 ist eine Leiterplatte, auf welcher eine Vielzahl von Lichtquellen 600, beispielsweise in Form von Halbleiter-Leuchtdioden, angeordnet sind und die Lichtquellen 600 jeweils eingerichtet sind, Licht zu emittieren und jeweils in einen zugeordneten Lichtleiter 601 einzukoppeln.

Zusätzlich weist das Bauteil 510 eine Abstreifkante 511 und eine Trennkante 512, sowie zwei Justieröffnungen 515, 517 auf.

Das Bauteil 520 weist Abstreifkanten 521, 611 und Trennkanten 522, 612, sowie zwei Justieröffnungen 615, 617 und zwei Justierstifte 525, 527 auf. Die Justierstifte 525, 527 können beispielsweise zylindrisch, rechteckig oder konusförmig sein, wobei die Justieröffnungen 615, 617 bevorzugt eine komplementäre Form aufweisen. Die Justieröffnungen 615, 617 sind in ihrem Durchmesser, quer zur Achse deren Längserstreckung, größer als die Justierstifte 525, 527, um eine Justierbarkeit der Anordnung zu gewährleisten.

Das Bauteil 620 weist eine Abstreifkante 611 und eine Trennkante 612, sowie zwei Justierstifte 625, 627 auf.

Zwischen den Bauteilen 510, 520, 620 ist jeweils das Zweikomponenten-Gemisch 135 an den jeweiligen Kleberflächen vorgesehen.

Es ist vorteilhaft, wenn die gezeigte Anordnung in einem zweistufigen Verfahren ausgerichtet und verklebt wird. So kann zuerst der Bauteil-Klebeverbund 500 demgemäß zusammengebaut werden, und anschließend der Bauteil-Klebeverbund 501, bei welchem der gesamte Bauteil-Klebeverbund 500 als erstes Bauteil 510 fungiert.

Dadurch wird erreicht, dass sowohl die Lichtquellen 600 zu den Lichtleitern 601 ausgerichtet und fixiert sind, als auch die Lichtleiter 601 bezüglich der Projektionsoptik 602.

Die Merkmale der gezeigten Ausführungsbeispiele können untereinander beliebig kombiniert werden, falls eine Anwendung besondere Erfordernisse hinsichtlich der Applikation und Verteilung des Klebstoffs aufweist.

**Bezugszeichenliste:**

| | |
|---|---|
| 1, 2, 3,4,500, 501 | Bauteil-Klebeverbund |
| 10, 20, 110, 120, 220, 310, 320, 410, 420, 510, 520, 620 | Bauteil |
| 11, 13, 22, 24 | Kleberfläche |
| 16,160-164 | Kraft |
| 17, 18, 55, 56, 515, 517, 615, 617 | Justieröffnung |
| 25, 26, 27, 28, 525, 527, 625, 627 | Justierstift |
| 221, 311, 321, 411, 421, 511, 521, 611, 621 | Abstreifkante |
| 412, 422, 512, 522, 612,622 | Trennkante |
| 50,150, 550 | Folie |
| 551, 552 | Kammer |
| 51, 53,130 | Harz |
| 52, 54,140 | Härter |
| 135 | Zweikomponenten-Gemisch |
| 505 | Kraftfahrzeugscheinwerfer |
| 600 | Lichtquelle |
| 601 | Lichtleiter |
| 602 | Projektionsoptik |

## Patentansprüche

1. Verfahren zur Ausrichtung und Verklebung zweier Bauteile (10, 20, 110, 120, 220, 310, 320, 410, 420, 510, 520, 620) mit einem Zweikomponenten-Klebstoff, **dadurch gekennzeichnet, dass** folgende Verfahrensschritte ausgeführt werden:
- Aufbringen eines Harzes (51, 53, 130) des Zweikomponenten-Klebstoffs auf zumindest eine erste vordefinierte Stelle auf einer ersten Folienseite einer Folie (50, 150, 550),
- Aufbringen eines Härters (52, 54, 140) des Zweikomponenten-Klebstoffs auf zumindest eine zweite vordefinierte Stelle auf einer zweiten Folienseite der Folie (50, 150, 550), die der ersten Folienseite gegenüber liegt,
- Anordnen der Folie (50, 150, 550) zwischen einem ersten Bauteil (10, 110, 310, 410, 510, 520) und einem zweiten Bauteil (20, 120, 220, 320, 420, 520, 620),
- Aneinanderpressen des ersten Bauteils (10, 110, 310, 410, 510, 520) an das zweite Bauteil (20, 120, 220, 320, 420, 520, 620) mit einer ersten Anpresskraft (161, 162), sodass das Harz (51, 53, 130) beziehungsweise der Härter (52, 54, 140) das erste Bauteil (10, 110, 310, 410, 510, 520) beziehungsweise das zweite Bauteil (20, 120, 220, 320, 420, 520, 620) jeweils in einer Kleberfläche (11, 13, 22, 24) kontaktiert,
- Ausrichten des ersten Bauteils (10, 110, 310, 410, 510, 520) mit dem zweiten Bauteil (20, 120, 220, 320, 420, 520, 620) in der Ebene der Kleberfläche (11, 13, 22, 24),
- Herausziehen der Folie (50, 150, 550) mit einer Abziehkraft (160) aus dem Bauteilverbund aus dem ersten Bauteil (10, 110, 310, 410, 510, 520) und dem zweiten Bauteil (20, 120, 220, 320, 420, 520, 620), wodurch sich das Harz (51, 53, 130) und der Härter (52, 54, 140) zu einem Zweikomponenten-Klebstoff-Gemisch (135) vermengen,
- Aneinanderpressen des ersten Bauteils (10, 110, 310, 410, 510, 520) an das zweite Bauteil (20, 120, 220, 320, 420, 520, 620) mit einer zweiten Anpresskraft (163, 164) und Ausrichten des ersten Bauteils (10, 110, 310, 410, 510, 520) mit dem zweiten Bauteil (20, 120, 220, 320, 420, 520, 620) normal zur Ebene der Kleberfläche (11, 13, 22, 24),
- Aushärten des Zweikomponenten-Klebstoff-Gemisches (135), indem der Härter (52, 54, 140) das Harz (51, 53, 130) aushärtet.

2. Verfahren nach Anspruch 1, **dadurch gekennzeichnet, dass** die Folie (50, 150, 550) auf zumindest einer Seite eine Kammer (551, 552) aufweist, welche das Harz (51, 53, 130) oder den Härter (52, 54, 140) beinhaltet, und vorzugsweise die Kammer (551, 552) an einem ersten Ende der Kammer (551, 552) offen ist, und es ferner vorgesehen ist, zum Herausziehen der Folie (50, 150, 550) eine Abziehkraft (160) an einem, dem ersten Ende gegenüberliegenden, zweiten Ende anzulegen.

3. Verfahren nach Anspruch 1 oder 2, **dadurch gekennzeichnet, dass** zumindest eines von dem ersten Bauteil (10, 110, 310, 410, 510, 520) und dem zweiten Bauteil (20, 120, 220, 320, 420, 520, 620) eine Abstreifkante (221, 311, 321, 411, 421, 511, 521, 611, 621) aufweist, welche zwischen dem ersten Bauteil (10, 110, 310, 410, 510, 520) beziehungsweise dem zweiten Bauteil (20, 120, 220, 320, 420, 520, 620) und der Folie (50, 150, 550) angeordnet ist und vorzugsweise mit dem ersten Bauteil (10, 110, 310, 410, 510, 520) beziehungsweise dem zweiten Bauteil (20, 120, 220, 320, 420, 520, 620) einteilig ausgeführt ist, und die Abstreifkante (221, 311, 321, 411, 421, 511, 521, 611, 621) eingerichtet ist, ein Herausziehen des Harzes (51, 53, 130) beziehungsweise des Härters (52, 54,140) beim Herausziehen der Folie (50, 150, 550) zu behindern, sodass das Harz (51, 53, 130) beziehungsweise der Härter (52, 54, 140) zwischen dem ersten Bauteil (10, 110, 310, 410, 510, 520) beziehungsweise dem zweiten Bauteil (20, 120, 220, 320, 420, 520, 620) verbleibt.

4. Verfahren nach Anspruch 3, **dadurch gekennzeichnet, dass** die Abstreifkante (221, 311, 321, 411, 421, 511, 521, 611, 621) auf der Kleberfläche (11, 13, 22, 24) auf dem ersten Bauteil (10, 110, 310, 410, 510, 520) beziehungsweise auf dem zweiten Bauteil (20, 120, 220, 320, 420, 520, 620) ausgebildet ist und in Richtung des jeweiligen anderen Bauteils von dem ersten Bauteil (10, 110, 310, 410, 510, 520) und dem zweiten Bauteil (20, 120, 220, 320, 420, 520, 620) eine Erhöhung aufweist.

5. Verfahren nach einem der Ansprüche 1 bis 4, **dadurch gekennzeichnet, dass** zumindest eines von dem ersten Bauteil (10, 110, 310, 410, 510, 520) und dem zweiten Bauteil (20, 120, 220, 320, 420, 520, 620) eine Trennkante (412, 422, 512, 522, 612, 622) aufweist, welche zwischen dem ersten Bauteil (10, 110, 310, 410, 510, 520) beziehungsweise dem zweiten Bauteil (20, 120, 220, 320, 420, 520, 620) und der Folie (50, 150, 550) angeordnet ist und vorzugsweise mit dem ersten Bauteil (10, 110, 310, 410, 510, 520) beziehungsweise dem zweiten Bauteil (20, 120, 220, 320, 420, 520, 620) einteilig ausgeführt ist, und die Trennkante (412, 422, 512, 522, 612, 622) eingerichtet ist, die flächige Ausbreitung des Zweikomponenten-Klebstoff-Gemisches (135) auf dem ersten Bauteil (10, 110, 310, 410, 510, 520) beziehungsweise dem zweiten Bauteil (20, 120, 220, 320, 420, 520, 620) zu begrenzen.

6. Verfahren nach Anspruch 5, **dadurch gekennzeichnet, dass** die Trennkante (412, 422, 512, 522, 612, 622) auf der Kleberfläche (11, 13, 22, 24) auf dem ersten Bauteil (10, 110, 310, 410, 510, 520) beziehungsweise auf dem zweiten Bauteil (20, 120, 220, 320, 420, 520, 620) ausgebildet ist und in Richtung des jeweiligen anderen Bauteils von dem ersten Bauteil (10, 110, 310, 410, 510, 520) und dem zweiten Bauteil (20, 120, 220, 320, 420, 520, 620) eine Erhöhung aufweist.

7. Verfahren nach einem der Ansprüche 1 bis 6, **dadurch gekennzeichnet, dass** die Folie (50, 150, 550) zumindest eine Justieröffnung (17, 18, 55, 56, 515, 517, 615, 617) umfasst, welche eingerichtet ist, mit zumindest einem korrespondierenden Justierstift (25, 26, 27, 28, 525, 527, 625, 627), welcher auf dem ersten Bauteil (10, 110, 310, 410, 510, 520) und/oder dem zweiten Bauteil (20, 120, 220, 320, 420, 520, 620) angeordnet ist, zusammenzuwirken und welche Justieröffnung (17, 18, 55, 56, 515, 517, 615, 617) so konfiguriert ist, dass die Folie (50, 150, 550) in der Richtung der Abziehkraft (160) entfernt werden kann.

## Claims

1. Method for aligning and bonding two components (10, 20, 110, 120, 220, 310, 320, 410, 420, 510, 520, 620) with a two-component adhesive, **characterized in that** the following method steps are carried out:
- Applying a resin (51, 53, 130) of the two-component adhesive to at least a first predefined location on a first film side of a film (50, 150, 550),
- Applying a hardener (52, 54, 140) of the two-component adhesive to at least a second predefined location on a second film side of the film (50, 150, 550) opposite the first film side,
- Arranging the foil (50, 150, 550) between a first component (10, 110, 310, 410, 510, 520) and a second component (20, 120, 220, 320, 420, 520, 620),
- Pressing the first component (10, 110, 310, 410, 510, 520) against the second component (20, 120, 220, 320, 420, 520, 620) with a first pressing force (161, 162) so that the resin (51, 53, 130) or the hardener (52, 54, 140) respectively contacts the first component (10, 110, 310, 410, 510, 520) or the second component (20, 120, 220, 320, 420, 520, 620) respectively in an adhesive surface (11, 13, 22, 24),
- Alignment of the first component (10, 110, 310, 410, 510, 520) with the second component (20, 120, 220, 320, 420, 520, 620) in the plane of the adhesive surface (11, 13, 22, 24)
- Pulling the film (50, 150, 550) with a peel force (160) out of the composite of the first component (10, 110, 310, 410, 510, 520) and the second component (20, 120, 220, 320, 420, 520, 620), whereby the resin (51, 53, 130) and the hardener (52, 54, 140) blend into a two-component adhesive mixture (135),
- pressing the first component (10, 110, 310, 410, 510, 520) against the second component (20, 120, 220, 320, 420, 520, 620) with a second contact pressure (163, 164) and aligning the first component (10, 110, 310, 410, 510, 520) with the second component (20, 120, 220, 320, 420, 520, 620) normal to the plane of the adhesive surface (11, 13, 22, 24),
- Cure the two-component adhesive mixture (135) by allowing the hardener (52, 54, 140) to cure the resin (51, 53, 130).

2. A method according to claim 1, **characterized in that** the film (50, 150, 550) has on at least one side a chamber (551, 552) containing the resin (51, 53, 130) or the hardener (52, 54, 140), and preferably the chamber (551, 552) is open at a first end of the chamber (551, 552), and it is further provided to apply a peeling force (160) at a second end opposite the first end to pull out the film (50, 150, 550).

3. A method according to claim 1 or 2, **characterized in that** at least one of the first component (10, 110, 310, 410, 510, 520) and the second component (20, 120, 220, 320, 420, 520, 620) has a stripping edge (221, 311, 321, 411, 421, 511, 521, 611), 621), which is arranged between the first component (10, 110, 310, 410, 510, 520) or the second component (20, 120, 220, 320, 420, 520, 620) and the film (50, 150, 550) and preferably with the first component (10, 110, 310, 410, 510), 520) or the second component (20, 120, 220, 320, 420, 520, 620), and the stripping edge (221, 311, 321, 411, 421, 511, 521, 611, 621) is arranged to permit withdrawal of the resin (51, 53, 130) or the hardener (52, 54), 140) when pulling out the film (50, 150, 550) so that the resin (51, 53, 130) or the hardener (52, 54, 140) remains between the first component (10, 110, 310, 410, 510, 520) or the second component (20, 120, 220, 320, 420, 520, 620), respectively.

4. Method according to claim 3, **characterized in that** the wiping edge (221, 311, 321, 411, 421, 511, 521, 611, 621) on the adhesive surface (11, 13, 22, 24) remains on the first component (10, 110, 310, 410, 510, 520) or on the second component (20, 120, 220, 320, 420, 520, 620) respectively, 120, 220, 320, 420, 520, 620) and has an elevation in the direction of the respective other component from the first component (10, 110, 310, 410, 510, 520) and the second component (20, 120, 220, 320, 420, 520, 620).

5. A method according to one of claims 1 to 4, **characterized in that** at least one of the first component (10, 110, 310, 410, 510, 520) and the second component (20, 120, 220, 320, 420, 520, 620) has a separating edge (412, 422, 512, 522, 612, 622), which is arranged between the first component (10, 110, 310, 410, 510, 520) or the second component (20, 120, 220, 320, 420, 520, 620) and the film (50, 150, 550) and is preferably designed in one piece with the first component (10, 110, 310, 410, 510, 520) or the second component (20, 120, 220, 320, 420, 520, 620), and the separating edge (412, 422, 512, 522, 612), 622) is arranged to limit the surface spread of the two-component adhesive mixture (135) on the first component (10, 110, 310, 410, 510, 520) or the second component (20, 120, 220, 320, 420, 520, 620).

6. Method according to claim 5, **characterized in that** the separating edge (412, 422, 512, 522, 612, 622) on the adhesive surface (11, 13, 22, 24) is to be limited on the first component (10, 110, 310, 410, 510, 520) or on the second component (20, 120, 220, 320, 420, 520, 620), respectively, 120, 220, 320, 420, 520, 620) and has an elevation in the direction of the respective other component from the first component (10, 110, 310, 410, 510, 520) and the second component (20, 120, 220, 320, 420, 520, 620).

7. Method according to one of claims 1 to 6, **characterized in that** the foil (50, 150, 550) comprises at least one adjustment opening (17, 18, 55, 56, 515, 517, 615, 617), which is arranged with at least one corresponding adjustment pin (25, 26, 27, 28, 525, 527, 625, 627), which is mounted on the first component (10, 110, 310, 410, 510, 520), 110, 310, 410, 510, 520) and/or the second component (20, 120, 220, 320, 420, 520, 620) and which adjustment opening (17, 18, 55, 56, 515, 517, 615, 617) is configured such that the film (50, 150, 550) can be removed in the direction of the peel force (160).

## Revendications

1. Procédé pour aligner et coller deux composants (10, 20, 110, 120, 220, 310, 320, 410, 420, 510, 520, 620) avec un adhésif à deux composants, **caractérisé en ce que** les étapes de procédé suivantes sont réalisées :
- L'application d'une résine (51, 53, 130) de l'adhésif à deux composants à au moins un premier endroit prédéfini sur un premier côté d'un film (50, 150, 550),
- Appliquer un durcisseur (52, 54, 140) de l'adhésif à deux composants à au moins un deuxième endroit prédéfini sur une deuxième face du film (50, 150, 550) opposée à la première face du film,
- Arrangement de la feuille (50, 150, 550) entre un premier élément (10, 110, 310, 410, 510, 520) et un second élément (20, 120, 220, 320, 420, 520, 620),
- Presser le premier composant (10, 110, 310, 410, 510, 520) contre le deuxième composant (20, 120, 220, 320, 420, 520, 620) avec une première force de pression (161, 162) afin que la résine (51, 53, 130) ou le durcisseur (52, 54, 140) entre respectivement en contact avec le premier composant (10, 110, 310, 410, 510, 520) ou le second composant (20, 120, 220, 320, 420, 520, 620) dans une surface adhésive (11, 13, 22, 24),
- Alignez le premier composant (10, 110, 310, 410, 510, 520) avec le deuxième composant (20, 120, 220, 320, 420, 520, 620) dans le plan de la surface adhésive (11, 13, 22, 24),
- Extraction du film (50, 150, 550) avec une force de pelage (160) du composite du premier composant (10, 110, 310, 410, 510, 520) et du second composant (20, 120, 220, 320, 420, 520, 620), la résine (51, 53, 130) et le durcisseur (52, 54, 140) se mélangeant pour former un mélange adhésif à deux composants (135),
- Presser le premier composant (10, 110, 310, 410, 510, 520) contre le deuxième composant (20, 120, 220, 320, 420, 520, 620) avec une deuxième pression de contact (163, 164) et en alignant le premier composant (10, 110, 310, 410, 510, 520) avec le deuxième composant (20, 120, 220, 320, 420, 520, 620) normalement au plan de la surface adhésive (11, 13, 22, 24),
- Faites durcir le mélange adhésif à deux composants (135) en laissant le durcisseur (52, 54, 140) durcir la résine (51, 53, 130).

2. Procédé selon la revendication 1, **caractérisé en ce que** le film (50, 150, 550) comporte sur au moins un côté une chambre (551, 552) contenant la résine (51, 53, 130) ou le durcisseur (52, 54, 140), et de préférence la chambre (551, 552) est ouverte à une première extrémité de la chambre (551, 552), et il est en outre prévu d'appliquer une force de pelage (160) à une deuxième extrémité opposée à la première extrémité pour retirer le film (50, 150, 550).

3. Procédé selon la revendication 1 ou 2, **caractérisé en ce qu'**au moins l'un du premier composant (10, 110, 310, 410, 510, 520) et du deuxième composant (20, 120, 220, 320, 420, 520, 620) présente un bord de dénudage (221, 311, 321, 411, 421, 511, 521, 611), 621), qui est disposé entre le premier composant (10, 110, 310, 410, 510, 520) ou le deuxième composant (20, 120, 220, 320, 420, 520, 620) et le film (50, 150, 550) et de préférence avec le premier composant (10, 110, 310, 410, 510), 520) ou le deuxième composant (20, 120, 220, 320, 420, 520, 620), et le bord de décapage (221, 311, 321, 411, 421, 511, 521, 611, 621) est disposé de manière à permettre le retrait de la résine (51, 53, 130) ou du durcisseur (52, 54), 140) lors de l'extraction du film (50, 150, 550) de sorte que la résine (51, 53, 130) ou le durcisseur (52, 54, 140) reste entre le premier composant (10, 110, 310, 410, 510, 520) ou le second composant (20, 120, 220, 320, 420, 520, 620), respectivement.

4. Procédé selon la revendication 3, **caractérisé en ce que** le bord d'essuyage (221, 311, 321, 411, 421, 511, 521, 611, 621) de la surface adhésive (11, 13, 22, 24) reste sur le premier composant (10, 110, 310, 410, 510, 520) ou sur le deuxième composant (20, 120, 220, 320, 420, 520, 620) respectivement, 120, 220, 320, 420, 520, 620) et a une élévation dans la direction de l'autre composante respective de la première composante (10, 110, 310, 410, 510, 520) et de la deuxième composante (20, 120, 220, 320, 420, 520, 620).

5. Méthode selon l'une des revendications 1 à 4, **caractérisée en ce qu'**au moins l'un des premier composant (10, 110, 310, 410, 510, 520) et deuxième composant (20, 120, 220, 320, 420, 520), 620) présente un bord de séparation (412, 422, 512, 522, 612, 622), qui est disposé entre le premier composant (10, 110, 310, 410, 510, 520) ou le deuxième composant (20, 120, 220, 320, 420, 520, 620) et le film (50, 150), 550) et est de préférence conçu d'une seule pièce avec le premier composant (10, 110, 310, 410, 510, 520) ou le second composant (20, 120, 220, 320, 420, 520, 620), et le bord de séparation (412, 422, 512, 522, 612), 622) est disposée de manière à limiter l'étalement en surface du mélange adhésif à deux composants (135) sur le premier composant (10, 110, 310, 410, 510, 520) ou le second composant (20, 120, 220, 320, 420, 520, 620).

6. Procédé selon la revendication 5, **caractérisé en ce que** le bord de séparation (412, 422, 512, 522, 612, 622) sur la surface adhésive (11, 13, 22, 24) doit être limité respectivement sur le premier composant (10, 110, 310, 410, 510, 520) ou sur le deuxième composant (20, 120, 220, 320, 420, 520, 620), 120, 220, 320, 420, 520, 620) et a une élévation dans la direction de l'autre composante respective de la première composante (10, 110, 310, 410, 510, 520) et de la deuxième composante (20, 120, 220, 320, 420, 520, 620).

7. Procédé selon l'une des revendications 1 à 6, **caractérisé en ce que** la feuille (50, 150, 550) comporte au moins une ouverture de réglage (17, 18, 55, 56, 515, 517, 615, 617), qui est disposée avec au moins une broche de réglage correspondante (25, 26, 27, 28, 525, 527, 625, 627), qui est montée sur le premier composant (10, 110, 310, 410, 510, 520), 110, 310, 410, 510, 520) et/ou le deuxième composant (20, 120, 220, 320, 420, 520, 620) et dont l'ouverture de réglage (17, 18, 55, 56, 515, 517, 615, 617) est configurée de telle sorte que le film (50, 150, 550) puisse être retiré dans le sens de la force de pelage (160).
